# EUROPÄISCHE PATENTSCHRIFT

(11) **EP 3 011 373 B1**
(45) Veröffentlichungstag und Bekanntmachung des Hinweises auf die Patenterteilung: **15.11.2017**
(21) Anmeldenummer: 14750438.5
(22) Anmeldetag: 28.05.2014
(51) Int. Cl.: G02B 5/20

(54) **VERFAHREN ZUR STEUERUNG DER OPTISCHEN EIGENSCHAFTEN VON UV-FILTERSCHICHTEN**
METHOD FOR CONTROLLING THE OPTICAL PROPERTIES OF UV FILTER LAYERS
PROCEDE DE COMMANDE DES PROPRIETES OPTIQUES DE COUCHES FILTRANT LES UV

(30) Priorität: 20.06.2013 EP 13003151
(43) Veröffentlichungstag der Anmeldung: 27.04.2016
(73) Patentinhaber: Merck Patent GmbH, 64293 Darmstadt (DE)
(72) Erfinder: HAEMING, Marc, 74861 Neudenau (DE); PACAK, Philipp, 64295 Darmstadt (DE); BONRAD, Klaus, 64665 Alsbach-Haehnlein (DE)
(86) Internationale Anmeldenummer: PCT/EP2014/001434
(87) Internationale Veröffentlichungsnummer: WO 2014/202178

(56) Entgegenhaltungen:
- DE-A1-102004 027 075
- JP-A- H04 264 171

## Beschreibung

Die Erfindung betrifft ein Verfahren zur Steuerung der optischen Eigenschaften von UV-Filterschichten, insbesondere zur Steuerung der UV-Absorptionseigenschaften von Metalloxid-haltigen UV-Filterschichten, damit hergestellte UV-Filterschichten sowie deren Verwendung, insbesondere zur Herstellung elektronischer Bauteile.

Im sichtbaren Wellenlängenbereich transparente Metalloxidschichten werden in vielfältiger Form als optische Schichten eingesetzt, beispielsweise in klassischen Optikanwendungen wie Brillen oder anderen optischen Gläsern. Sie finden aber auch Anwendung in elektronischen Bauteilen wie verschiedenen Dioden (LEDs, OLEDs), Transistoren, Solarzellen und dergleichen. In Letzteren ist oftmals ein Schutz vor der Einwirkung ultravioletter Strahlung erforderlich, weil unter anderem auch organische Materialien enthalten sind, die unter der Einwirkung ultravioletter Strahlung schnell altern. Daher werden im sichtbaren Wellenlängenbereich transparente Metalloxide, welche eine gewisse UV-Absorption aufweisen, als UV-absorbierende Materialien auch für elektronische Bauteile eingesetzt. Einige dieser Metalloxide weisen darüber hinaus auch elektrisch leitende oder halbleitende Eigenschaften auf, so dass sie gleichzeitig als Leiter oder Halbleiter in elektronischen Bauelementen verwendet werden können.

Um die positiven UV-abschirmenden Eigenschaften bestimmter Metalloxide oder Metallmischoxide mit guten elektrisch leitenden oder halbleitenden Eigenschaften verbinden zu können, werden derzeit aufwändige Herstellungsverfahren für optische Schichten aus Metalloxiden bzw. Metallmischoxiden wie beispielsweise ITO, ZnO, IZO oder IGZO eingesetzt. Dabei handelt es sich insbesondere um Verfahren wie Sputtern oder chemische oder physikalische Verdampfungsverfahren (CVD- Chemical Vapor Deposition, PVD - Physical Vapor Deposition). Diese Verfahren sind relativ gut steuerbar, so dass die gewünschten Charakteristika sowohl in Bezug auf die optischen als auch auf die elektrisch leitenden Eigenschaften erzielt werden können. Allerdings sind CVD- und PVD-Verfahren apparativ aufwändig und nicht unter Normaldruck zu betreiben. Beim Sputterverfahren wird die Zusammensetzung der zu erzeugenden Schicht durch das vorgegebene Sputtertarget festgelegt und ist nicht variabel steuerbar. Des Weiteren werden üblicherweise Metalloxidschichten auch durch säure- oder basenkatalysierte Sol-Gel-Verfahren erhalten. Dieses Verfahren hat jedoch den Nachteil, dass die verwendeten Sole in der Regel nur eine extrem kurze Lebensdauer bei gleichbleibender Qualität aufweisen und sich bei Lagerung ständig graduell verändern, so dass eine industrielle Großproduktion schwer steuerbar ist. JP H04 264171 A offenbart UV absorbierende Filme auf transparenten Substraten z.B. Glas. Die Filme werden erhalten durch Auftragen von Lösungen, die Titaniumalkoxide, (Hydrolysate oder Kondensate), Zink acetylacetonat und weitere anorganische Zinkverbindungen enthalten. Nach dem Auftragen werden die Filme bei 80°C getrocknet und bei 400-500°C weiterbehandelt.

Allen beschriebenen Verfahren gemein ist der Nachteil, dass die Verfahren größere Variationen in der Zusammensetzung der erhaltenen Schichten nicht gestatten. Die stoffliche Zusammensetzung der jeweiligen Schicht bestimmt aber auch deren optisches Verhalten, so dass es auch in diesem Bereich, insbesondere hinsichtlich des Grades der UV-Absorption, keine Variationsmöglichkeiten gibt. Außerdem wäre es vorteilhaft, über ein einfaches, gut steuerbares und massenproduktionstaugliches Auftragsverfahren zu verfügen, welches bei Normaldruck und Normalatmosphäre arbeitet und nur einen geringen apparativen Aufwand erfordert. Es besteht daher ein Bedarf an einem einfachen Verfahren zur Aufbringung von Metalloxidschichten auf Substrate, bei dem die optischen Eigenschaften, insbesondere die UV-Absorptionseigenschaften der Schichten, den jeweiligen Anwendungsanforderungen individuell angepasst werden können, die stoffliche Zusammensetzung der Schichten je nach Bedarf variiert werden kann und bei dem die gleichzeitig vorhandenen elektrisch leitenden oder halbleitenden Eigenschaften der Metalloxidschichten keine qualitative Einbuße erleiden.

Aufgabe der Erfindung ist es daher, ein massentaugliches Verfahren zur Steuerung der UV-Absorptionseigenschaften von Metalloxid-haltigen Schichten zur Verfügung zu stellen, mit Hilfe dessen die oben genannten Erfordernisse an UV-Filterschichten erfüllt werden.

Eine weitere Aufgabe der vorliegenden Erfindung besteht darin, die mit dem genannten Verfahren herstellbaren, in den optischen Eigenschaften variabel einstellbaren Metalloxidschichten zur Verfügung zu stellen.

Darüber hinaus besteht eine Aufgabe der Erfindung darin, die Verwendung der so erzeugten Metalloxidschichten aufzuzeigen.

Überraschenderweise konnte nun festgestellt werden, dass die oben genannten Aufgaben der Erfindung durch ein einfaches nasschemisches Verfahren gelöst werden, bei dem eine metallorganische Verbindung auf ein Substrat aufgebracht und in ein Metalloxid oder Metallmischoxid überführt wird, wobei die Auftragsbedingungen variiert werden und abhängig von der jeweiligen Variation unterschiedliche UV-Absorptionseigenschaften der resultierenden Schichten erhalten werden.

Die Aufgabe der Erfindung wird daher gelöst durch ein Verfahren zur Steuerung der UV-Absorptionseigenschaften von Metalloxid-haltigen UV-Filterschichten, wobei
A) eine Schicht aus einer metallorganischen Verbindung auf ein Substrat aufgebracht und bei einer Temperatur im Bereich von >230°C bis 500°C in eine Schicht aus einem Metalloxid oder einem Metallmischoxid überführt wird, wobei es sich bei dem Metalloxid und/oder Metallmischoxid um ITO, ZnO, IZO oder IGZO handelt und/oder
B) eine metallorganische Verbindung auf ein Substrat aufgebracht und in ein Metalloxid oder Metallmischoxid überführt wird und wobei das Aufbringen und Überführen mehrfach nacheinander unter Ausbildung von Mehrschichtsystemen aus Metalloxiden und/oder Metallmischoxiden erfolgt und die metallorganische Verbindung für eine einzelne Schicht in einer diese enthaltenden Lösung oder Dispersion in einer Konzentration aufgebracht wird, die sich mit steigender Gesamtanzahl an Schichten in den Mehrschichtsystemen verringert, wobei innerhalb eines einzelnen Mehrschichtsystems die Konzentration in jeder der einzelnen Schichten gleich ist, und wobei es sich bei dem Metalloxid und/oder Metallmischoxid um ITO, ZnO, IZO oder IGZO handelt.
Die Aufgabe der Erfindung wird des Weiteren auch gelöst durch Metalloxid-haltige Filterschichten, die nach dem genannten Verfahren hergestellt sind. Darüber hinaus wird die Aufgabe der Erfindung auch gelöst durch die Verwendung der erfindungsgemäß hergestellten Metalloxid-haltigen UV-Filterschichten als UV-Filterschichten sowie elektrisch halbleitende Schichten in elektronischen Bauelementen.

Als UV-absorbierender Bereich wird erfindungsgemäß der Wellenlängenbereich eingestrahlter optischer Strahlung zwischen 200 und 400 nm betrachtet. Definitionsgemäß gehört der Wellenlängenbereich zwischen 100 und 200 nm (100-280 nm, UV-C-Strahlung) ebenso zur UV-Strahlung. Allerdings wird natürliche Strahlung des Wellenlängenbereichs von 100 bis 280 nm bereits nahezu vollständig in der Atmosphäre absorbiert, so dass Untersuchungen zur Absorption von optischer Strahlung im Wellenlängenbereich von 100 bis 200 nm in Bezug auf die vorliegende Erfindung nicht relevant sind.

Erfindungsgemäß erfolgt die Herstellung von UV-absorbierenden und gleichzeitig elektrisch halbleitenden oder leitenden Metalloxidschichten aus deren in Lösemitteln gelösten oder in flüssigen Dispergiermitteln dispergierten metallorganischen Vorläuferverbindungen, d.h. aus Metalloxid-Precursor-Lösungen oder Metalloxid-Precursor-Dispersionen, die vergleichsweise einfach zu Beschichtungszusammensetzungen oder Druckfarben verarbeitet werden können, welche in den gängigen Beschichtungs- und Druckverfahren für eine Massenproduktion einsetzbar sind.

Obwohl sich für das erfindungsgemäße Verfahren viele der bekannten metallorganischen Vorläuferverbindungen von UV-absorbierenden, halbleitenden oder leitenden Metalloxiden (d.h. solche metallorganischen Verbindungen, die sich bei nachfolgender Behandlung, die thermisch und/oder mittels aktinischer Strahlung (UV und/oder IR) erfolgt, in flüchtige Bestandteile wie Kohlendioxid, Aceton etc., sowie in die gewünschten Metalloxide zersetzen) eignen, werden im Rahmen der vorliegenden Erfindung vorzugsweise metallorganische Verbindungen eingesetzt, bei denen es sich um Metall-Carboxylat-Komplexe der Metalle Zink oder Zinn, wahlweise im Gemisch mit Metall-Carboxylat-Komplexen der Metalle Indium und/oder Gallium, mit den Koordinationszahlen 3 bis 6 handelt, die jeweils mindestens einen Liganden aus der Gruppe der Alkoxyiminocarbonsäuren (Oximate) aufweisen, oder auch Metall-Komplexe der genannten Metalle mit Enolat-Liganden, wobei unter dem Begriff "Metalle" erfindungsgemäß die oben genannten Elemente zu verstehen sind, die entweder Metall- oder Halbmetall- oder auch Übergangsmetalleigenschaften aufweisen können. Es sind jedoch auch die Acetate der genannten Metalle verwendbar, die sich ebenfalls leicht in die Metalloxide überführen lassen.

Besonders bevorzugt werden Gemische aus Metall-Carboxylat-Komplexen oder Metall-Enolaten von mindestens zwei verschiedenen der genannten Metalle eingesetzt.

Insbesondere handelt es sich bei dem mindestens einen Liganden um ein 2-(Methoxyimino)-alkanoat, ein 2-(Ethoxyimino)alkanoat oder ein 2-(Hydroxyimino)-alkanoat, die nachfolgend ebenfalls als Oximate bezeichnet werden. Diese Liganden werden durch Kondensation von alpha-Ketosäuren bzw. Oxocarbonsäuren mit Hydroxylaminen oder Alkylhydroxylaminen in Gegenwart von Basen in wässriger oder methanolischer Lösung synthetisiert.

Ebenfalls bevorzugt wird als Ligand ein Enolat, insbesondere Acetylacetonat, eingesetzt, welches in Form von Acetylacetonat-Komplexen verschiedener Metalle auch zu anderen technischen Zwecken gebräuchlich und daher kommerziell erhältlich ist.

Vorzugsweise handelt es sich bei allen Liganden der erfindungsgemäß eingesetzten Metall-Carboxylat-Komplexe um Alkoxyiminocarbonsäure-Liganden, insbesondere um die vorab genannten, oder es handelt sich um Komplexe, bei denen die Alkoxyiminocarbonsäure-Liganden lediglich zusätzlich mit H₂O komplexiert sind, aber ansonsten im Metall-Carboxylat-Komplex keine weiteren Liganden enthalten sind.

Auch bei den vorab beschriebenen Metall-Acetylacetonaten handelt es sich vorzugsweise um Komplexe, die ebenfalls außer Acetylacetonat keine weiteren Liganden enthalten.

Werden metallorganische Oximat-Precursor-Verbindungen verschiedener Metalle als Ausgangsstoffe eingesetzt ist es vorteilhaft, wenn alle Ausgangsstoffe der gleichen Stoffgruppe angehören, also jeweils Oximate mit Oximaten gemischt werden.

Die Herstellung der erfindungsgemäß bevorzugt eingesetzten Metall-Carboxylat-Komplexe, die Alkoxyiminocarbonsäure-Liganden aufweisen, ist in den Druckschriften WO 2009/010142 A2 und WO 2010/078907 A1 bereits genauer beschrieben worden. Auf die genannten Dokumente wird insofern in vollem Umfang Bezug genommen.

Im Allgemeinen bilden sich dabei die Metalloxid-Precursoren, d.h. die organischen Gallium-, Indium-, Zink-, oder Zinnkomplexe, bei Raumtemperatur durch Umsetzung einer Oxocarbonsäure mit mindestens einem Hydroxyl- oder Alkylhydroxylamin in Gegenwart einer Base, wie z.B. Tetraethylammoniumhydrogencarbonat oder Natriumhydrogencarbonat und anschließender Zugabe eines anorganischen Gallium-, Indium-, Zink- oder Zinnsalzes wie z.B. Galliumnitrat-Hexahydrat, wasserfreies Indiumchlorid oder Zinnchlorid-Pentahydrat. Als Oxocarbonsäure können alle Vertreter dieser Verbindungsklasse eingesetzt werden. Bevorzugt werden aber Oxoessigsäure, Oxopropionsäure oder Oxobuttersäure eingesetzt.

Die genannten metallorganischen Metalloxid-Vorläuferverbindungen (Precursoren) werden erfindungsgemäß vorzugsweise in gelöster oder dispergierter Form eingesetzt. Zu diesem Zwecke werden sie in geeigneten Konzentrationen, die jeweils auf das einzusetzende Beschichtungsverfahren sowie auf die Anzahl und Zusammensetzung der aufzubringenden Metalloxid-Precursor-Schichten eingestellt werden müssen, in geeigneten Lösemitteln gelöst bzw. in geeigneten Dispergiermitteln dispergiert.

Als Lösemittel oder Dispergiermittel kommen dabei Wasser und/oder organische Lösemittel in Betracht, beispielsweise Alkohole, Carbonsäuren, Ester, Ether, Aldehyde, Ketone, Amine, Amide oder auch Aromaten. Es können auch Mischungen von mehreren organischen Lösemitteln oder Dispergiermitteln oder Mischungen von Wasser mit organischen Lösemitteln oder Dispergiermitteln eingesetzt werden.

Die vorab bereits beschriebenen Metall-Carboxylat-Komplexe mit Alkoxyiminocarbonsäure-Liganden (Oximate) werden vorzugsweise in 2-Methoxyethanol oder Tetrahydrofuran gelöst.

In einer ersten Ausführungsform der vorliegenden Erfindung wird zunächst eine metallorganische Verbindung oder ein Gemisch aus metallorganischen Verbindungen, in gelöster oder dispergierter Form, also die Metalloxid-Precursor-Lösung oder-Dispersion, als eine einzelne Schicht auf das jeweilige Substrat aufgebracht, wodurch eine Metalloxid-Precursor-Schicht erhalten wird, die anschließend optional getrocknet und nachfolgend thermisch in eine Metalloxidschicht oder, je nach Zusammensetzung der Ausgangsstoffe, Metallmischoxidschicht überführt wird.

Die thermische Behandlung wird bei Temperaturen im Bereich von >230°C bis 500°C durchgeführt. Die Temperaturbehandlung findet dabei in Luft oder unter Schutzgas statt.

Es hat sich überraschend herausgestellt, dass eine Variation der Temperaturbehandlung innerhalb des Bereiches von >230°C bis 500°C bei gleichbleibender stofflicher Zusammensetzung (siehe vorherige Beschreibung) zu unterschiedlichen UV-Absorptionseigenschaften der resultierenden Schicht führt.

Dabei ist die UV-Absorption im UV-A Bereich (315-400 nm) sowie im UV-B Bereich (280 -315 nm) ebenso wie die Absorption der UV-C-Strahlung im Bereich von 200-280 nm umso größer, je höher die Temperaturbehandlung innerhalb der Grenzen des oben genannten Temperaturbereichs ausgeführt wird.

Vorteilhafterweise erfolgt die Steuerung der UV-Absorptionseigenschaften der zu erzeugenden Metalloxid-haltigen Schichten daher über eine stufenweise Anpassung der Überführungstemperatur (je nach gewünschten UV-Absorptionseigenschaften bei 250, 300, 350, 400, 450 oder 500°C) des Metalloxidprecursors oder -precursorgemisches in das Metalloxid oder Metallmischoxid.

Während die Metalloxidschicht oder Metallmischoxidschicht bei einer Überführungstemperatur im Bereich von >230 °C bis 350 °C noch mindestens 90% der UV-A-Strahlung sowie noch mindestens 75% der UV-B-Strahlung transmittiert, erfolgt bei einer Überführungstemperatur im Bereich von > 350 °C bis 500°C, insbesondere ab 450°C, eine bereits signifikante Absorption im UV-A sowie im UV-B Bereich, die bis zu 25% der UV-A-Strahlung und bis zu 40% der UV-B-Strahlung beträgt.

Eingestrahltes Licht im sichtbaren Wellenlängenbereich (400 bis 780 nm) wird dagegen bei Schichten, die im gesamten Bereich von > 230°C bis 500 °C in Metalloxid-haltige Schichten überführt werden, nahezu vollständig, mindestens aber zu 95%, transmittiert. Das heißt, dass die erzeugten Metalloxid-haltigen Schichten aus den vorab genannten Materialien im sichtbaren Bereich optisch transparent sind.

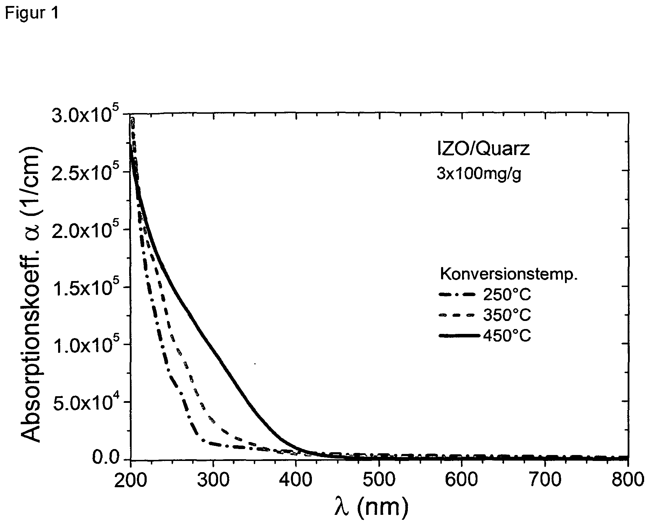

Eine grafische Darstellung des Einflusses der Temperaturbehandlung auf die UV-Absorption eines 3-Schichtsystems aus IZO (3x 100mg/g) Indium-Zink-Oxid) ist in Figur 1 gezeigt. Ähnliche Untersuchungen an einem Einschichtsystem aus 1x 100 mg/g IZO zeigen jeweils annähernd denselben Kurvenverlauf.

Die UV-Absorption im Bereich von 200 nm bis 400 nm einer erfindungsgemäß erzeugten Metalloxidschicht bzw. Metallmischoxidschicht lässt sich daher je nach Einsatzgebiet der entsprechenden Schichten durch einfache Temperaturführung steuern. Gleichzeitig kann die Metalloxidschicht über ein einfaches, nasschemisches Verfahren auf ein entsprechendes Substrat aufgebracht und auf einfache Weise in eine Metalloxidschicht überführt werden.

Sind die halbleitenden Eigenschaften der erzeugten Metalloxid- bzw. Metallmischoxid-Schichten von besonderer Bedeutung bei der beabsichtigten Anwendung, kann die elektrische Leitfähigkeit der erzeugten Metalloxid-haltigen Schicht noch erhöht werden, wenn die Temperaturbehandlung nicht in Luft, sondern unter Schutzgas, bevorzugt unter Argon, ausgeführt wird.

In einer zweiten Ausführungsform der vorliegenden Erfindung erfolgt das Aufbringen einer metallorganischen Verbindung sowie deren Überführung in ein Metalloxid bzw. in ein Metallmischoxid mehrfach nacheinander, so dass jeweils ein Mehrschichtsystem aus Metalloxiden, Metallmischoxiden oder aus einer Kombination aus beiden erhalten wird. Dabei weist die metallorganische Verbindung in einer diese enthaltenden Lösung oder Dispersion eine Konzentration auf, die sich mit steigender Gesamtanzahl der Schichten jeweils verringert, also bei geringer Anzahl der Schichten hoch und bei hoher Anzahl der Schichten gering ist.

Es werden mindestens 2 und bis zu 25 Schichten, vorzugsweise 2 bis 15 Schichten auf das Substrat nacheinander und übereinander liegend aufgebracht, so dass ein Mehrschichtsystem aus 2 bis 25 Einzelschichten entsteht.

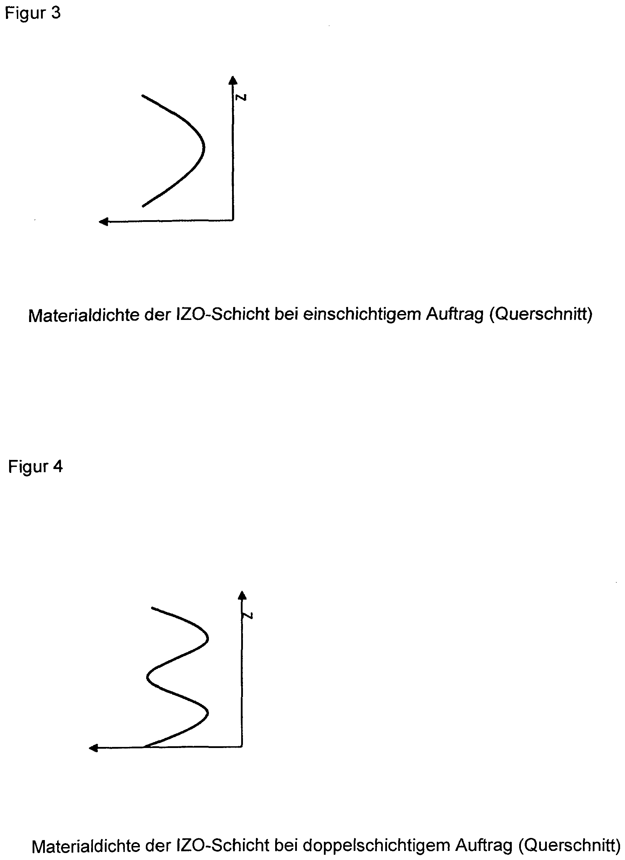

Erfindungsgemäß ist es von Bedeutung, dass die metallorganischen Verbindungen von jeder der Einzelschichten separat in Metalloxide oder Metallmischoxide überführt werden, bevor die nächste Schicht aus metallorganischen Verbindungen aufgebracht wird. Bei dieser Verfahrensführung entstehen glatte Grenzflächen zwischen den Einzelschichten, wobei die inneren Bereiche der Einzelschicht jeweils noch über eine gewisse Porosität verfügen. Figur 3 zeigt die schematische Darstellung der Materialdichte einer einschichtigen IZO-Schicht (aus Oximat-Precursoren). Figur 4 zeigt die schematische Darstellung der Materialdichte einer doppelschichtigen IZO-Schicht (aus Oximat-Precursoren). Der Materialauftrag an IZO pro Flächeneinheit ist in Figur 3 und Figur 4 jeweils gleich.

Obwohl der Wirkungsmechanismus dieser Mehrlagenschichten bezüglich der UV-Absorption nicht vollständig geklärt ist wird vermutet, dass die Porosität im Inneren der Einzelschichten und die steigende Anzahl der Schichten zu den Unterschieden im UV-Absorptionsverhalten der erfindungsgemäß erhaltenen Mehrlagenschicht führt.

Die Überführung der metallorganischen Verbindungen in Metalloxide bzw. Metallmischoxide muss bei dieser zweiten Ausführungsform der Erfindung nicht zwangsläufig thermisch erfolgen, sondern kann zusätzlich oder alternativ zur thermischen Behandlung auch durch eine Bestrahlung mit aktinischer Strahlung, d.h. mit UV- und/oder IR-Strahlung erfolgen. Bei der UV-Bestrahlung werden Wellenlängen < 400 nm, bevorzugt im Bereich von 150 bis 380 nm, eingesetzt. IR-Strahlung kann mit Wellenlängen von > 800 nm eingesetzt werden, vorzugsweise von >800 bis 3000 nm. Auch durch diese Behandlung zersetzen sich die metallorganischen Precursoren und geben flüchtige organische Bestandteile sowie ggf. Wasser ab, so dass eine Metalloxidschicht bzw. Metallmischoxidschicht auf dem Substrat verbleibt.

Die Konzentration der metallorganischen Verbindungen (Metalloxid-Precursorverbindungen) in der aufzubringenden Lösung oder Dispersion liegt erfindungsgemäß im Bereich von 1 bis 10 Gew.%, bezogen auf das Gewicht der Lösung oder Dispersion. Es werden mindestens 2 und bis zu 25 Schichten auf das Substrat aufgebracht, so dass ein Mehrschichtsystem entsteht. Dabei wird eine geringe Konzentration von beispielsweise 1,5 Gew.% mindestens 10 mal, bevorzugt 12 bis 20 mal, nacheinander auf das Substrat aufgebracht und in das entsprechende Metalloxid oder Metallmischoxid überführt, während eine Precursorlösung, welche 10 Gew.% eines organischen Metalloxid-Precursors enthält, lediglich 2fach auf das Substrat aufgebracht wird.

Auf diese Weise entstehen Mehrschichtsysteme, die eine Gesamt(trocken)-dicke von 200 nm nicht überschreiten. Damit ist der Einsatz solcher Mehrschichtsysteme sowohl als UV-Filterschichten als auch bedarfsweise als halbleitende Schichten mit variablen UV-Absorptionseigenschaften möglich.

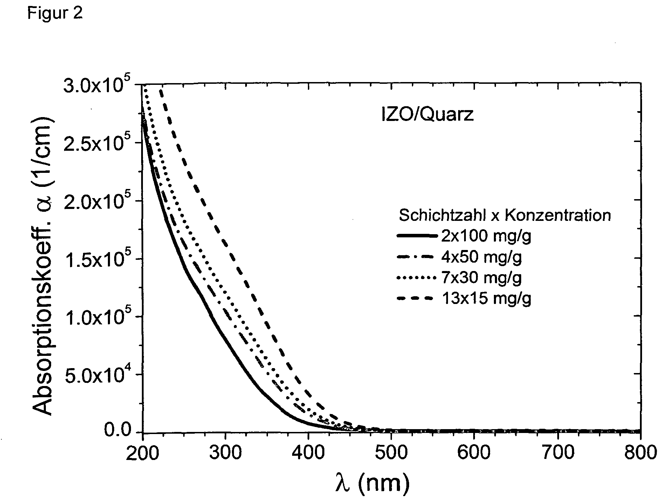

Überraschenderweise konnte festgestellt werden, dass mit steigender Anzahl der Schichten bei gleichzeitiger Verringerung der Konzentration der metallorganischen Verbindung (Metalloxid-Precursor) in der Lösung oder Dispersion für die jeweilige Einzelschicht eine deutliche Erhöhung der UV-Absorption im gesamten untersuchten Bereich von 200 bis 400 nm auftritt. Während beispielsweise der Zweifachauftrag einer 10 Gew.% igen Metalloxid-Precursorlösung zu einer UV-Absorption im UV-A-Bereich von bis zu 25% und einer Absorption im UV-B Bereich von bis zu 40% des eingestrahlten Lichtes führt, kann beim 13fachen Auftrag einer Metalloxid-Precursorlösung aus den gleichen Materialien, aber in einer jeweiligen Konzentration von 1,5 Gew.%, bezogen auf das Gewicht der Lösung, eine UV-Absorption von bis zu 50% im UV-A Bereich und bis zu 80% des eingestrahlten Lichtes im UV-B Bereich erzielt werden. Eine Darstellung des Einflusses von Konzentration und Anzahl der Schichten für ein Mehrschichtsystem aus IZO ist in Figur 2 gezeigt.

Durch einfache Variation der Konzentration der metallorganischen Precursorverbindung im jeweiligen Auftragsmedium und der Anzahl der übereinander aufgebrachten Schichten kann daher die UV-Absorption im gesamten untersuchten UV-Bereich von 200 bis 400 nm willentlich auf einfache Weise angepasst an die jeweiligen Erfordernisse eingestellt werden.

Darüber hinaus verfügen Mehrschichtsysteme aus den vorab genannten Metalloxiden bzw. Metallmischoxiden auch über sehr gute elektrisch halbleitende Eigenschaften. Diese können auch bei den erfindungsgemäßen Mehrschichtsystemen durch eine zusätzliche Temperung in Schutzgasatmosphäre, insbesondere in Argon bei einer Temperatur im Bereich von 200-300°C, noch verbessert werden.

Bezüglich der eingesetzten Materialien und des erfindungsgemäßen Verfahrens werden auch mit der zweiten Ausführungsform der vorliegenden Erfindung Metalloxid-haltige Schichten erhalten, die im Wellenlängenbereich von 400 bis 780 nm nahezu vollständig, mindestens aber zu 95%, transparent sind, also einfallendes Licht der genannten Wellenlängen transmittieren.

Der Einfluss des in der zweiten Ausführungsform der vorliegenden Erfindung dargelegten Mehrschichtsystems mit wechselnder Zusammensetzung in Konzentration und ggf. Material und die damit einher gehenden Variationsmöglichkeiten auf die Steuerbarkeit der UV-Absorptionseigenschaften von UV-Absorptionsschichten ist größer als der Einfluss der in der ersten Ausführungsform dargelegten alleinigen Temperaturführung. Daher ist die zweite Ausführungsform der vorliegenden Erfindung bevorzugt.

Insbesondere bevorzugt ist jedoch die Ausführungsform der vorliegenden Erfindung, bei welche die erste und die zweite Ausführungsform miteinander kombiniert werden, also das Verfahren zur Steuerung der UV-Absorptionseigenschaften von UV-absorbierenden Metalloxidschichten , bei welchem die Überführung der metallorganischen Metalloxid-Precursor-verbindungen in ein Metalloxid oder Metallmischoxid thermisch erfolgt und zusätzlich ein Mehrschichtsystem aus mindestens zwei Metalloxid-haltigen Schichten erzeugt wird.

Das Aufbringen der einzelnen Metalloxid-Precursor-Schichten für eine einzelne Metalloxidschicht oder Metallmischoxidschicht sowie ebenso für das Mehrschichtsystem gemäß der zweiten Ausführungsform der vorliegenden Erfindung auf ein Substrat kann mittels verschiedener bekannter Beschichtungs- und Druckverfahren erfolgen. Insbesondere kommen hierfür ein Spincoating-Verfahren, ein Bladecoating-Verfahren, ein Wirecoating-Verfahren oder ein Spraycoating-Verfahren, oder auch übliche Druckverfahren wie Inkjetdruck, Flexodruck, Offsetdruck, Schlitzgussdruck und Siebdruck in Betracht. Besonders bevorzugt sind dabei das Spincoating-Verfahren und das Inkjet-Verfahren.

Als Substrate kommen feste Substrate wie Glas, Keramik, Metall oder Kunststoff, aber insbesondere auch flexible Substrate wie Kunststofffolien oder Metallfolien in Betracht. Diese Substrate können je nach Anwendungszweck auch bereits mit verschiedensten Materialien vorbeschichtet sein.

Gegenstand der vorliegenden Erfindung ist auch eine UV-absorbierende Beschichtung aus Metalloxiden und/oder Metallmischoxiden, welche, neben variabel einstellbaren UV-absorbierenden Eigenschaften, im sichtbaren Wellenlängenbereich (VIS) optische Transparenz sowie ebenfalls elektrisch halbleitende Eigenschaften aufweist und nach dem erfindungsgemäßen Verfahren hergestellt ist.

Der Schichtaufbau, die stoffliche Zusammensetzung und die Schichtdickenverhältnisse von derart hergestellten UV-Absorptionsschichten sind vorab bereits ausführlich beschrieben worden. Nach der obigen Beschreibung versteht es sich außerdem von selbst, dass der Begriff "Metalloxid" für die erfindungsgemäße Metalloxid-Mehrlagenschicht reine Metalloxide sowie Metallmischoxide sowie deren dotierte Formen einschließt.

Gegenstand der vorliegenden Erfindung ist auch die Verwendung der vorab beschriebenen UV-absorbierenden Metalloxid-haltigen Schichten zur Herstellung elektronischer Bauelemente, insbesondere zur Herstellung halbleitender funktioneller Schichten für diese Bauelemente.

Als elektronische Bauelemente kommen dabei insbesondere verschiedene Dioden wie LEDs und OLEDs, aber auch Transitoren sowie Solarzellen in Betracht.

Das erfindungsgemäße Verfahren zur Steuerung der UV-Absorptionseigenschaften von Metalloxid-haltigen UV-Absorptionsschichten führt zu Metalloxid-haltigen UV-Absorptionsschichten, die in einfachen, nasschemischen Verfahren unter normalen Druckverhältnissen auf übliche Substrate aufgebracht werden können und sich daher für die Massenherstellung solcher UV-Absorptionsschichten eignen. Gleichzeitig kann der Grad der UV-Absorption über einfache Variationen in Temperaturführung und/oder Schichtaufbau variabel entsprechend der jeweiligen Anwendungserfordernisse eingestellt werden. Zusätzlich verfügen die so erzeugten Metalloxidschichten und/oder Metallmischoxidschichten auch über halbleitende Eigenschaften, die ebenso bedarfsweise durch die stoffliche Zusammensetzung als auch durch die möglichen Schichtdickenvariationen eingestellt werden können. Das erfindungsgemäße Verfahren ermöglicht so auf einfache und kostengünstige Weise die Massenherstellung von Metalloxid-haltigen UV-Filterschichten, die vorteilhafterweise je nach Verwendungszweck in Zusammensetzung und UV-Filtereigenschaften variiert werden können und damit auf sehr kostengünstige Weise zu Beschichtungen mit vielfältigen Einsatzmöglichkeiten führen, die sowohl UV-Filtereigenschaften als auch elektrisch halbleitende Eigenschaften in sich vereinen.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und kommerziell erhältlich oder können nach bekannten Methoden synthetisiert werden.

Verzeichnis der Figuren:
Fit-1: zeigt die Abhängigkeit der UV-Absorption einer 3-lagigen IZO-Schicht von der Ausheiztemperatur (Überführungstemperatur in das Metallmischoxid) des Precursors gemäß Beispiel 1
Fig. 2: zeigt die Abhängigkeit der UV-Absorption von der Anzahl der Schichten in einem Mehrschichtsystem aus IZO und von der entsprechenden Precursorkonzentration gemäß Beispiel 2
Fig. 3: zeigt die schematische Darstellung der Materialdichte einer einzelnen IZO-Schicht über den Querschnitt der Schicht
Fig. 4: zeigt die schematische Darstellung der Materialdichte einer doppellagigen IZO-Schicht über den Querschnitt des Doppelschichtsystems

### Beispiele:

### Beispiel 1: Herstellung eines Metalloxidschichtsystems (IZO) aus einer 10 Gew.%igen IZO (Indium-Zink-Oxid) Precursor-Lösung auf der Basis von Oximat-Precursoren

Eine 10 Gew.-% ige Lösung aus 0,10 g Zinkoximat in 0,90 g 2-Methoxyethanol wird mit einer 10 Gew.-% igen Lösung aus 0,10 g Indiumoximat in 0,90 g 2-Methoxyethanol so gemischt, dass das molare Verhältnis in der Mischung In:Zn= 1,5:1 ist. Diese Mischung wird ca. 5 Minuten lang in einem Ultraschallbad homogen durchmischt. Bei Bedarf kann anschließend eine Filtration (20 µm Porengröße) erfolgen. Es wird ein gereinigtes Quarzglassubstrat mit der Precursorlösung beschichtet, wobei der Prozess bestehend aus den nachfolgenden 4 Prozessschritten dreimal nacheinander durchgeführt wird:
- Aufbringen der Precursor-Lösung per Spincoating (30 s, 2500 U/min),
- Trocknen bei Raumtemperatur (10 s),
- thermische Behandlung (4 min),
- Abkühlen auf Raumtemperatur.

Es werden jeweils 3 Quarzglassubstrate beschichtet, die jeweils bei verschiedenen Temperaturen thermisch behandelt werden. Die Temperatur beträgt 250°C, 350°C oder 450°C.

In Figur 1 ist die Abhängigkeit des Absorptionskoeffizienten α von der Ausheiztemperatur der einzelnen Proben dargestellt. Mit verringerter Ausheiztemperatur steigt die spektrale Breite des transmittierten Lichtes, während die Absorption insbesondere im UV-A und UV-B Bereich bei steigender Ausheiztemperatur deutlich zunimmt.

### Beispiel 2: Herstellung von mehrschichtigen Halbleiterschichtsystemen aus IZO Precursor-Lösungen auf der Basis von Oximat-Precursoren

Analog zu Beispiel 1 werden x Gew.-% ige IZO Precursorlösungen hergestellt, wobei x die Werte 1,5; 3,0; 5,0 und 10 aufweist. Die wie in Beispiel 1 vorbereiteten Substrate werden durch wiederholtes Durchführen der in Beispiel 1 dargelegten Verfahrensschritte mit IZO-Precursor-Lösungen beschichtet und nacheinander in ein IZO-Mehrschichtsystem überführt. Es werden auf mehrere Quarzglassubstrate jeweils eine unterschiedliche Anzahl an Schichten mit jeweils unterschiedlicher Konzentration der Precursorlösung aufgebracht. Es werden folgende Schichten aufgebracht:
2-Schichtsystem aus jeweils 10 Gew.%iger Lösung
4-Schichtsystem aus jeweils 5 Gew.%iger Lösung
7-Schichtsystem aus jeweils 3 Gew.%iger Lösung
13-Schichtsystem aus jeweils 1,5 Gew.%iger Lösung

Figur 2 zeigt die Abhängigkeit des Absorptionskoeffizienten α von der Anzahl der Schichten und der Konzentration der Precursorlösung. Mit steigender Anzahl an Schichten bei gleichzeitig niedriger Konzentration der Precursorlösung ist danach die Absorption im UV-A sowie im UV-B Bereich am größten, während die spektrale Breite des transmittierten Lichtes mit fallender Anzahl an Schichten bei gleichzeitig hoher Konzentration der Precursorlösung steigt.

## Patentansprüche

1. Verfahren zur Steuerung der UV-Absorptionseigenschaften von Metalloxid-haltigen UV-Filterschichten wobei
A) eine Schicht aus einer metallorganischen Verbindung auf ein Substrat aufgebracht und bei einer Temperatur im Bereich von >230°C bis 500°C in eine Schicht aus einem Metalloxid oder einem Metallmischoxid überführt wird, wobei es sich bei dem Metalloxid und/oder Metallmischoxid um ITO, ZnO, IZO oder IGZO handelt und wobei die Temperatur stufenweise angepasst wird und 250°C, 300°C, 350°C, 400°C, 450°C oder 500°C beträgt, und/oder
B) eine metallorganische Verbindung auf ein Substrat aufgebracht und in ein Metalloxid oder Metallmischoxid überführt wird und wobei das Aufbringen und Überführen mehrfach nacheinander unter Ausbildung von Mehrschichtsystemen aus Metalloxiden und/oder Metallmischoxiden erfolgt und die metallorganische Verbindung für eine einzelne Schicht in einer diese enthaltenden Lösung oder Dispersion in einer Konzentration aufgebracht wird , die sich mit steigender Gesamtanzahl an Schichten in den Mehrschichtsystemen verringert, wobei innerhalb eines einzelnen Mehrschichtsystems die Konzentration in jeder der einzelnen Schichten gleich ist, und wobei es sich bei dem Metalloxid und/oder Metallmischoxid um ITO, ZnO, IZO oder IGZO handelt.

2. Verfahren gemäß Anspruch 1, **dadurch gekennzeichnet, dass** es sich bei der metallorganischen Verbindung um ein Metall-Oximat, ein Metall-Acetylacetonat und/oder ein Metall-Acetat handelt.

3. Verfahren gemäß Anspruch 1 oder 2, **dadurch gekennzeichnet, dass** die Schicht oder das Mehrschichtsystem aus Metalloxiden und/oder Metallmischoxiden eine Gesamtschichtdicke von höchstens 200 nm aufweisen.

4. Verfahren gemäß einem oder mehreren der Ansprüche 1 bis 3, **dadurch gekennzeichnet, dass** ein Mehrschichtsystem aus 2 bis 25 einzelnen Schichten aus Metalloxiden und/oder Metallmischoxiden hergestellt wird.

5. Verfahren gemäß einem oder mehreren der Ansprüche 1 bis 4, **dadurch gekennzeichnet, dass** eine Schicht oder ein Mehrschichtsystem aus Metalloxiden und/oder Metallmischoxiden erhalten wird, die/ das eingestrahltes Licht im Wellenlängenbereich von 400 nm bis 780 nm zu mindestens 95% transmittiert.

6. Verfahren gemäß einem oder mehreren der Ansprüche 1 bis 5, **dadurch gekennzeichnet, dass** eine Schicht oder ein Mehrschichtsystem aus Metalloxiden und/oder Metallmischoxiden erhalten wird, die/ das eingestrahltes Licht im Wellenlängenbereich von 315 nm bis 400 nm bis zu 25% absorbiert.

7. Verfahren gemäß einem oder mehreren der Ansprüche 1 bis 6, **dadurch gekennzeichnet, dass** eine Schicht oder ein Mehrschichtsystem aus Metalloxiden und/oder Metallmischoxiden erhalten wird, die/ das eingestrahltes Licht im Wellenlängenbereich von 315 nm bis 400 nm bis zu 50% absorbiert.

8. Metalloxid-haltige UV-Filterschichten, hergestellt nach einem Verfahren gemäß einem oder mehreren der Ansprüche 1 bis 7.

9. Verwendung von Metalloxid-haltigen UV-Filterschichten gemäß Anspruch 8 als UV-Filterschichten in elektronischen Bauelementen.

10. Verwendung gemäß Anspruch 9, **dadurch gekennzeichnet, dass** es sich bei den elektronischen Bauelementen um LEDs, OLEDs, Transistoren oder Solarzellen handelt.

## Claims

1. Method for controlling the UV absorption properties of metal oxide-containing UV filter layers, where
A) a layer comprising an organometallic compound is applied to a substrate and converted into a layer comprising a metal oxide or a mixed metal oxide at a temperature in the range from >230°C to 500°C, where the metal oxide and/or mixed metal oxide is ITO, ZnO, IZO or IGZO and where the temperature is adjusted stepwise and is 250°C, 300°C, 350°C, 400°C, 450°C or 500°C, and/or
B) an organometallic compound is applied to a substrate and converted into a metal oxide or mixed metal oxide and where the application and conversion is carried out a number of times successively with formation of multilayered systems comprising metal oxides and/or mixed metal oxides and the organometallic compound for an individual layer is applied in a solution or dispersion comprising same in a concentration which decreases with increasing total number of layers in the multilayered systems, where the concentration in each of the individual layers is the same within a single multilayered system and where the metal oxide and/or mixed metal oxide is ITO, ZnO, IZO or IGZO.

2. Method according to Claim 1, **characterised in that** the organometallic compound is a metal oximate, a metal acetylacetonate and/or a metal acetate.

3. Method according to Claim 1 or 2, **characterised in that** the layer or multilayered system comprising metal oxides and/or mixed metal oxides has a total layer thickness of at most 200 nm.

4. Method according to one or more of Claims 1 to 3, **characterised in that** a multilayered system is produced from 2 to 25 individual layers comprising metal oxides and/or mixed metal oxides.

5. Method according to one or more of Claims 1 to 4, **characterised in that** a layer or multilayered system comprising metal oxides and/or mixed metal oxides is obtained which transmits at least 95% of the incident light in the wavelength range from 400 nm to 780 nm.

6. Method according to one or more of Claims 1 to 5, **characterised in that** a layer or multilayered system comprising metal oxides and/or mixed metal oxides is obtained which absorbs up to 25% of the incident light in the wavelength range from 315 nm to 400 nm.

7. Method according to one or more of Claims 1 to 6, **characterised in that** a layer or multilayered system comprising metal oxides and/or mixed metal oxides is obtained which absorbs up to 50% of the incident light in the wavelength range from 315 nm to 400 nm.

8. Metal oxide-containing UV filter layers produced by a method according to one or more of Claims 1 to 7.

9. Use of metal oxide-containing UV filter layers according to Claim 8 as UV filter layers in electronic components.

10. Use according to Claim 9, **characterised in that** the electronic components are LEDs, OLEDs, transistors or solar cells.

## Revendications

1. Procédé pour contrôler/commander les propriétés d'absorption des UV de couches de filtre UV contenant un/des oxyde(s) métallique(s), où
A) une couche qui comprend un composé organométallique est appliquée sur un substrat et est convertie selon une couche qui comprend un oxyde métallique ou un oxyde métallique mélangé à une température dans la plage qui est définie par > 230° C à 500° C, où l'oxyde métallique et/ou l'oxyde métallique mélangé est de l'ITO, du ZnO, de l'IZO ou de l'IGZO et où la température est réglée par pas et est de 250° C, 300° C, 350° C, 400° C, 450° C ou 500° C, et/ou
B) un composé organométallique est appliqué sur un substrat et est converti selon un oxyde métallique ou un oxyde métallique mélangé et où l'application et la conversion sont mises en oeuvre un certain nombre de fois en succession avec la formation de systèmes à multiples couches qui comprennent des oxydes métalliques et/ou des oxydes métalliques mélangés, et le composé organométallique pour une couche individuelle est appliqué dans une solution ou une dispersion qui le comprend selon une concentration qui diminue lorsque le nombre total de couches dans les systèmes à multiples couches augmente, où la concentration dans chacune des couches individuelles est la même à l'intérieur d'un unique système à multiples couches et où l'oxyde métallique et/ou l'oxyde métallique mélangé est de l'ITO, du ZnO, de l'IZO ou de l'IGZO.

2. Procédé selon la revendication 1, **caractérisé en ce que** le composé organométallique est un oximate métallique, un acétylacétonate métallique et/ou un acétate métallique.

3. Procédé selon la revendication 1 ou 2, **caractérisé en ce que** la couche ou le système à multiples couches qui comprend des oxydes métalliques et/ou des oxydes métalliques mélangés présente une épaisseur totale d'au plus 200 nm.

4. Procédé selon une ou plusieurs des revendications 1 à 3, **caractérisé en ce qu'**un système à multiples couches est produit à partir de 2 à 25 couches individuelles qui comprennent des oxydes métalliques et/ou des oxydes métalliques mélangés.

5. Procédé selon une ou plusieurs des revendications 1 à 4, **caractérisé en ce qu'**une couche ou un système à multiples couches qui comprend des oxydes métalliques et/ou des oxydes métalliques mélangés est obtenu(e), laquelle/lequel transmet au moins 95 % de la lumière incidente dans la plage de longueurs d'onde qui va de 400 nm à 780 nm.

6. Procédé selon une ou plusieurs des revendications 1 à 5, **caractérisé en ce qu'**une couche ou un système à multiples couches qui comprend des oxydes métalliques et/ou des oxydes métalliques mélangés est obtenu(e), laquelle/lequel absorbe jusqu'à 25 % de la lumière incidente dans la plage de longueurs d'onde qui va de 315 nm à 400 nm.

7. Procédé selon une ou plusieurs des revendications 1 à 6, **caractérisé en ce qu'**une couche ou un système à multiples couches qui comprend des oxydes métalliques et/ou des oxydes métalliques mélangés est obtenu(e), laquelle/lequel absorbe jusqu'à 50 % de la lumière incidente dans la plage de longueurs d'onde qui va de 315 nm à 400 nm.

8. Couches de filtre UV contenant un/des oxyde(s) métallique(s) produites au moyen d'un procédé selon une ou plusieurs des revendications 1 à 7.

9. Utilisation de couches de filtre UV contenant un/des oxyde(s) métallique(s) selon la revendication 8 en tant que couches de filtre UV dans des composants électroniques.

10. Utilisation selon la revendication 9, **caractérisé en ce que** les composants électroniques sont des diodes électroluminescentes ou LED, des diodes électroluminescentes organiques ou OLED, des transistors ou des cellules solaires.
